# EUROPEAN PATENT SPECIFICATION

(11) **EP 4 574 726 B1**
(45) Date of publication and mention of the grant of the patent: **12.08.2026**
(21) Application number: 24220643.1
(22) Date of filing: 17.12.2024
(51) Int. Cl.: B65H 75/44, F16D 59/00, F16D 51/26, F16D 65/22

(54) **A BELT RETRACTOR FOR A BELT FOR RETAINING OBJECTS IN SPACE ENVIRONMENTS**
GURTAUFROLLER FÜR EINEN GURT ZUM HALTEN VON OBJEKTEN IN WELTRAUMUMGEBUNGEN
ENROULEUR POUR UNE SANGLE DE SÉCURITÉ POUR RETENIR DES OBJETS DANS DES ENVIRONNEMENTS SPATIAUX

(30) Priority: 18.12.2023 IT 202300026910
(43) Date of publication of application: 25.06.2025
(73) Proprietor: Sabelt S.p.A., 10129 Torino (IT)
(72) Inventor: CAMPANELLA, Luca, I-10129 TORINO (IT); GRAZIANO, Giulio, I-10129 TORINO (IT)
(74) Representative: Fioravanti, Corrado

(56) References cited:
- EP-B1- 0 922 353
- CN-U- 207 452 768
- FR-A1- 2 955 570
- GB-A- 2 376 051

## Description

### Technical field

The present invention relates to a belt retractor for a belt for retaining objects in space environments.

### Background Art

In space or aerospace environments, in substantial weightlessness or reduced gravity environments, there is a need to restrain certain objects such as boxes, suits, cylinders or the like, by tying them to wall panels or other static structural elements of the environment to prevent such objects from floating freely in the environment.

For this purpose, the use of retractable belts or straps, substantially similar to seat belts, has been proposed. These are equipped with a retractor onto which the belt is wound to such an extent as to hold the attached object adjacent to the wall or other structural elements of the environment. When the belt is not in use, it is completely rewound into the retractor. At the free end of the belt, there is a tab that snaps into a buckle located either on the retractor itself, causing the belt to form a closed loop, or at another point in the environment.

In a substantial near-zero gravity environment, the automatic rewinding of the belt, when the tab at the end of the belt is released, causes the belt to be rewound very quickly onto a spool due to the rewinding spring. This rapid movement produces a whiplash effect that is undesirable.

A belt retractor according to the preamble of claim 1 is known from GB 2 376 051 A, which discloses a tape retractor, also suitable for a belt, as described in the preamble of claim 1 and including a speed restricting mechanism for a tape cartridge, for example for a personnel barrier. The mechanism includes a stationary brake drum, a spool for the tape, a rewinding spring, and a centrifugally activated braking mechanism. The braking mechanism operates automatically to slow the speed of tape retraction, but allows the tape to be withdrawn freely. It comprises an elastomeric brake plate with outer arms that are centrifugally urged against the brake drum during rewinding. A rotor with drive pins engages the brake plate in a direction-sensitive manner to either allow or prevent this centrifugal braking action.

### Summary of the Invention

In order to avoid the aforementioned drawback, the present invention provides a belt retractor having the features set forth in claim 1. Preferred embodiments are set forth in the dependent claims.

In summary, a belt retractor for a belt for retaining objects in space environments is associated with a centrifugally activated braking mechanism that allows normal unwinding of the belt when it is pulled to extract it from the retractor, and, during the rewinding phase, the braking mechanism automatically limits the speed at which the belt is rewound onto the spool. The belt retractor comprises a manually operated locking device which serves to stop the rotation of the spool, thereby temporarily locking the angular position of the spool and thus the length of the portion of the belt being unwound off the retractor.

### Brief Description of the Drawings

In order that the present invention may be well understood, a few preferred embodiments of the invention will now be described, given by way of example, with reference to the accompanying drawings, in which:

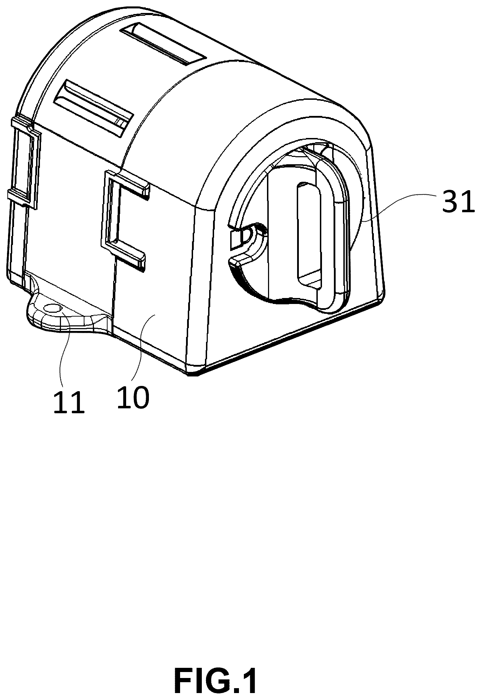

- Figure 1 is a perspective view of a retractor in a closed condition;
- Figure 2 is a cross-sectional view of the retractor of Figure 1;

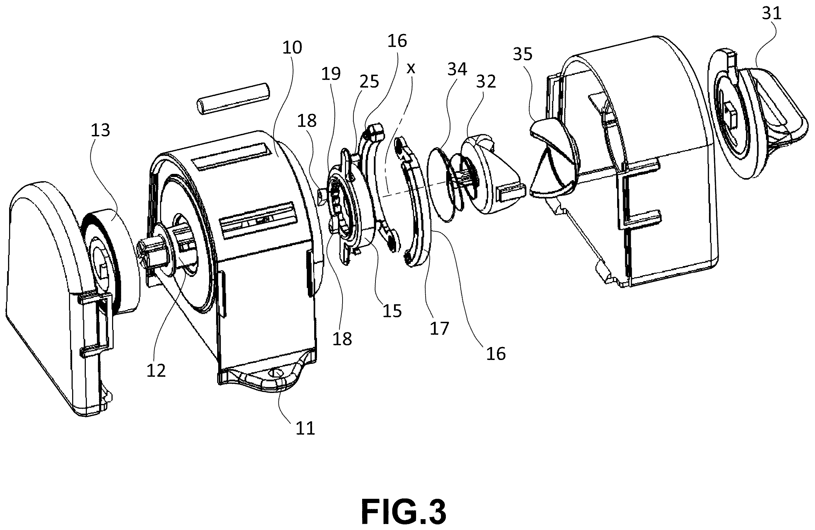

- Figure 3 is an exploded perspective view showing the components of the retractor of Figures 1 and 2;
- Figure 4 is a cross-sectional view of the retractor of Figure 1 in a condition in which a locking device is in an open or unlocked condition; and
- Figure 5 is a sectional view, similar to Figure 4, showing a condition in which the spool is rotationally locked.

### Detailed Description

Referring to the drawings, a belt retractor for a belt for retaining objects in space environments comprises an outer housing 10, preferably of rigid plastic material, comprising the union of two or more complementary housing elements. The outer housing 10 is provided with appendages or projections or other means 11 for securing the retractor to a stationary support (not illustrated) in a space environment.

In the present context, the term 'space environment' means an environment such as a station or spacecraft or other means of transport located in regions of space with reduced or absent gravity.

The housing 10 contains a spool for winding and rewinding a belt for retaining objects, a braking mechanism associated with the spool and, optionally, a locking device capable of blocking the rotation of the spool.

On the spool 12, which is rotatable about an x-axis of rotation, a belt (not illustrated) can be wound for retaining objects, such as cylinders, space suits, and other items that are not intended to float freely in the environment due to the substantial absence of gravity.

A rewinding spring 13, preferably a coil spring, is used to rotate the spool 12 in a direction that rewinds the belt onto the spool. An inner braking surface 14, having a concave cylindrical shape, is firmly fixed inside the outer housing 10.

A centrifugally activated braking mechanism is interposed between the spool 12 and the inner cylindrical braking surface 14. The braking mechanism comprises an intermediate annular support 15, rotation-sensitive locking means 18, 19 which are rotationally releasable and capable of rotationally connecting the spool to one or more braking bodies 16, which are frictionally sliding against the cylindrical braking surface 14.

The intermediate annular support 15, rotatable about the axis of rotation x and arranged concentrically to it, is arranged between the spool 12 and the inner cylindrical braking surface 14.

At least one movable braking body 16 movably mounted on the intermediate annular support 15 has a convex surface 17 elastically urged against the inner cylindrical braking surface 14.

Preferably, two movable braking bodies 16 are provided, mounted swinging on respective swing pins 25 spaced apart on the intermediate annular support, according to an arrangement of symmetry with respect to the axis of rotation x, each associated with an elastic element 24 which elastically stresses the movable braking bodies 16 in radially outer directions to bring their convex surfaces 17 to engage against the inner cylindrical braking surface 14.

According to an embodiment, the or each movable braking body 16 is configured as a brake shoe, mounted oscillating on a respective swing pin 25 on the intermediate annular support 15 and has its convex surface 17 facing the inner cylindrical braking surface 14. Preferably, the inner cylindrical surface 14 and the convex surfaces 17 have corresponding curvatures.

The centrifugally activated braking mechanism comprises mutually cooperating, rotation-sensitive locking means 18 and 19 acting between the spool 12 and the intermediate annular support 15, capable of rotationally locking the spool and the intermediate annular support in response to a rotation of the spool in a belt rewinding direction, and rotationally releasing the intermediate annular support from the spool in response to a rotation of the spool in a belt unwinding direction.

The rotation-sensitive locking means comprise at least one pawl 18 swingably mounted on the spool 12 about an axis of oscillation parallel to the axis of rotation x and having a free end 21 which is capable of swinging, in response to rotation of the spool in the belt unwinding direction, towards a radially outwardly extended position.

Preferably, the rotation-sensitive locking means comprise two or more pawls 18 mounted swinging on the spool around respective axes of oscillation spaced apart and parallel to the axis of rotation x. In the exemplary embodiment illustrated in the drawings, two pawls are provided which are angularly spaced 180° around the axis of rotation x and have respective free ends 21 oriented in substantially opposite directions according to an angle of 180°.

The intermediate annular support 15 has a central cavity 20 which centrally accommodates the spool and forms a cavity around it. In the central cavity 20, a plurality of engagement recesses 19 radially spaced from the spool are formed integral or integral with the intermediate annular support 15, which are designed to cooperate operationally with the pawls 18 to form, together with the pawls 18, the rotation-sensitive locking means.

The engagement recesses 19 are circumferentially distributed around the spool 12 and each of them serves to lock, in a respective angular position, the spool 12. In particular, the engagement recesses each serve to lock, in a respective angular position of the spool 12, the free end 21 of the or each pawl 18 when the spool 12 rotates in the belt rewinding direction of rotation, but are configured not to lock the free end of the pawl when the spool rotates in the belt unwinding direction of rotation.

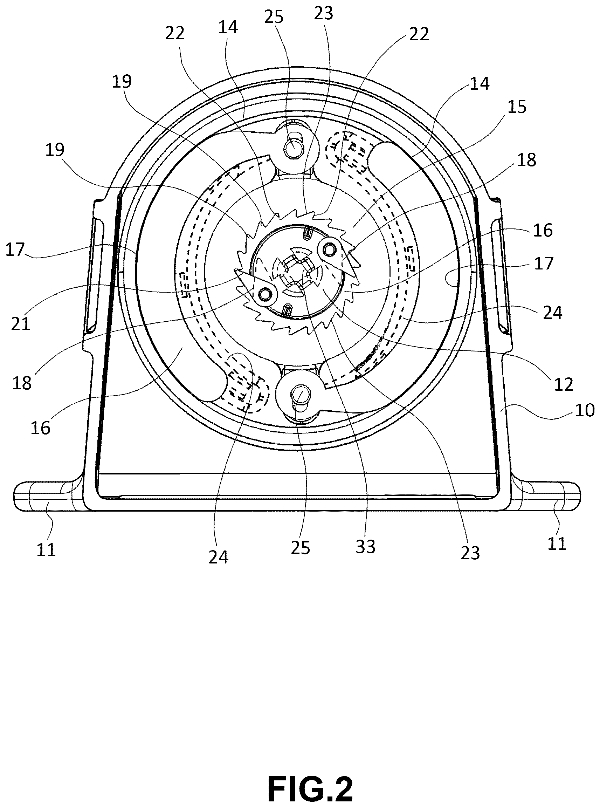

According to a preferred embodiment, as shown in Figure 2, the engagement recesses 19 are configured in a saw-tooth pattern, with alternating faces 22 oriented in substantially radial directions with respect to the axis of rotation x and faces 23 inclined in substantially tangential directions with respect to the spool 12.

By virtue of the above-described arrangement, the centrifugally activated braking mechanism is capable of alternately and automatically reaching two operating arrangements: an unbraked arrangement and a braked arrangement. The braked arrangement is achieved when the spool 12 rotates in a belt unwinding direction, whereby the free ends of the pawls 18 slide over the points identified between the engagement recesses 19. In this condition, which occurs when a user pulls the belt and partially withdraws it from the retractor, unwinding it off the spool, the spool can rotate freely with respect to the inner cylindrical braking surface 14 and the housing 10 of the retractor.

The braking arrangement occurs automatically when the spool 12, under the action of the rewinding spring 13, rotates rapidly in the direction of belt winding. In such a condition, the centrifugal acceleration acting on the spool rotates the pawls 18 in radially outward directions about their respective axes of oscillation, causing the free ends of the pawls to each engage in a respective engagement recess 19. The spool 12 is thus made rotationally integral with the intermediate annular support 15, rotating it around the axis x together with the movable braking bodies 16. The sliding friction that develops at the interface between the movable braking bodies 16 and the inner cylindrical braking surface 14 slows down or at least limits the angular speed of rotation of the spool rewinding, thus avoiding a whip effect of the belt that would otherwise be rewound too fast in substantial absence of gravity.

According to the invention, the belt retractor also comprises a locking device to block the rotation of the spool 12. The locking device comprises a manually operated member 31 mounted on the outer housing 10, a locking seat 33 integral with the spool 12, and an intermediate locking member 32 interposed between the manually operated member 31 and the spool 12.

The intermediate locking member 32 is a translating member slidably mounted inside the housing 10, manually operable by an operator who can act on the manually operated member in order to block the rotation of the spool 12 and temporarily fix the length of the section of tape extracted from the rewinder.

According to a preferred embodiment, the intermediate locking member 32 acts as a latch sliding axially in a direction parallel to or coincident with the axis of rotation x, without possibility of rotation about said axis. Axially extended guiding elements may be provided at the interface between the intermediate locking member and the housing 10 or a stationary element integral therewith.

In the illustrated example, the locking seat 33 on the spool 12 is provided by a plurality of elastic fingers substantially parallel to the axis of rotation x and protruding from a side face of the spool 12 angularly spaced about the central axis of rotation x.

The locking device may further comprise a spring 34 that urges the intermediate locking member 32 away from the locking seat 33 on the spool 12.

In the exemplary embodiment illustrated, the manually operated member 31 is a rotatable knob member, operatively associated with the intermediate locking member 32 via a cam mechanism 35, 36 which, following a manual rotation imparted to the manually operated member 31, causes the intermediate locking member 32 to translate towards the locking seat 33 integral with the spool 12.

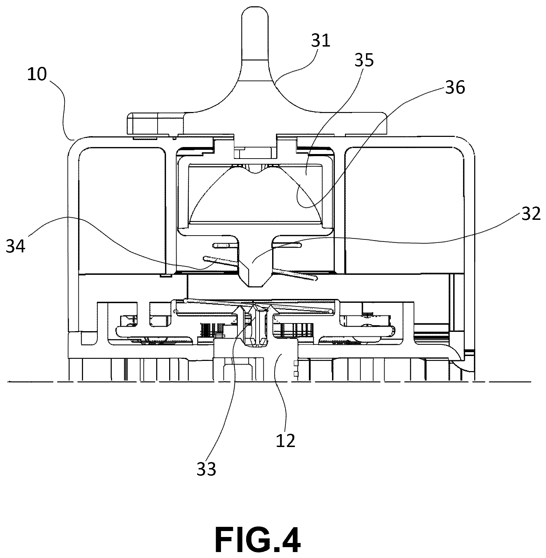

Figure 4 illustrates a rotationally unlocked spool condition, in which the intermediate locking member 32 does not engage the spool 12, and therefore the user can lengthen and shorten the section of tape extracted from the retractor.

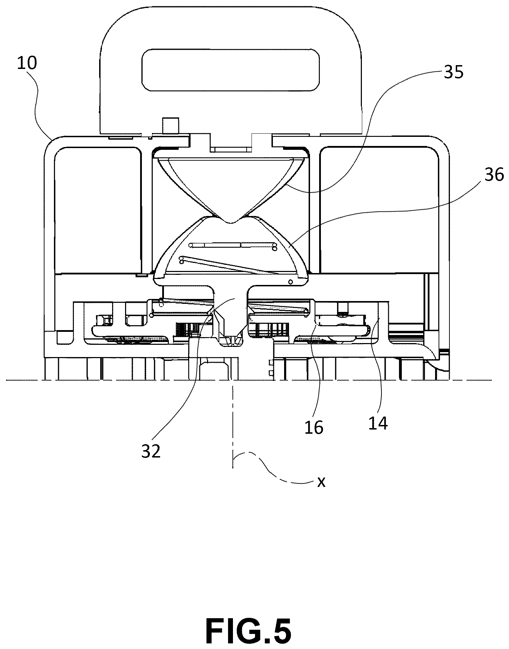

By rotating the manually operated member 31 to the position of Figure 5, such rotation, by engaging the cam mechanism 35, 36, causes the intermediate locking member 32 to move to engage the locking seat 33, preventing it from rotating.

Various aspects and embodiments of the retractor have been described. It is understood that the invention is not limited to the described embodiments, but may be varied within the scope defined by the appended claims.

## Claims

1. A belt retractor for a belt for retaining objects in a space environment, the belt retractor comprising:
an outer housing (10) having means (11) for fixing the retractor securely to a stationary support in a space environment, wherein the housing contains:
- a spool (12), rotatable about an axis (x) of rotation, on which a belt can be wound;
- a rewinding spring (13) capable of rotating the spool (12) about said axis of rotation in a direction of rotation which rewinds the belt on the spool;
- an inner cylindrical braking surface (14) integral with the outer housing (10);
- a centrifugally activated braking mechanism, interposed between the spool (12) and the inner cylindrical braking surface (14), wherein the centrifugally activated braking mechanism comprises:
an intermediate annular support (15), rotatable about the axis of rotation (x), and arranged between the spool (12) and the inner cylindrical braking surface (14), at least one movable braking body (16), movably mounted on the intermediate annular support (15) and having a convex surface (17) elastically urged against the inner cylindrical braking surface (14), and
rotation-sensitive locking means (18, 19) acting between the spool (12) and the intermediate annular support (15), capable of rotationally locking the spool and the intermediate annular support in response to a rotation of the spool in a belt rewinding direction, and rotationally releasing the intermediate annular support from the spool in response to a rotation of the spool in a belt unwinding direction;
whereby the centrifugally activated braking mechanism is capable of alternately and automatically reaching two operating arrangements:
an unbraked arrangement, when the spool (12) is rotated in a belt unwinding direction, in which arrangement the spool can rotate freely with respect to the braking surface; and
a braked arrangement, wherein when the spool (12) is urged by the rewinding spring (13) to rotate in a belt rewinding direction, the rotation of the spool in the belt rewinding direction causes the rotation-sensitive locking means (18, 19) to make the spool (12) rotationally integral with said movable braking body (16);
**characterized in that** the belt retractor further comprises a locking device for locking rotation of the spool (12), wherein the locking device comprises: a manually operated member (31) mounted on the outer housing (10), a locking seat (33) integral with the spool (12), and an intermediate locking member (32), interposed between the manually operated member (31) and the spool (12), capable of reaching a locked position, in which the manually operated member (31) holds the intermediate locking member (32) engaged in the locking seat (33) of the spool preventing it from rotating, and an unlocked position, in which the manually operated member (31) allows the intermediate locking member (32) to release from the locking seat (33) of the spool, allowing it to rotate.

2. A belt retractor according to claim 1, wherein the rotation-sensitive locking means comprise
at least one pawl (18) swingably mounted on the spool (12) about an axis of oscillation parallel to the axis of rotation and having a free end (21) which is capable of swinging, upon rotation of the spool in the belt rewinding direction, in a radially outwardly extended position, and
a plurality of engagement recesses (19) radially spaced apart from the spool and circumferentially distributed in a central cavity (20) formed by the intermediate annular support (15), wherein the engagement recesses are configured to be capable of locking the free end (21) of the pawl (18) when the spool (12) rotates in the belt rewinding direction of rotation, and of not locking the free end of the pawl when the spool rotates in the belt unwinding direction of rotation.

3. A belt retractor according to claim 2, wherein the engagement recesses (19) are configured as saw teeth, with alternating faces (22) oriented in substantially radial directions with respect to the axis of rotation (x) and faces (23) inclined in substantially tangential directions with respect to the spool (12).

4. A belt retractor according to claim 1 or 2 or 3, wherein the rotation-sensitive locking means comprise two or more pawls (18) swingably mounted on the spool around respective axes of oscillation spaced apart and parallel to the axis of rotation (x).

5. A belt retractor according to any one of the preceding claims, wherein said at least one movable braking body (16) is configured as a brake shoe swingably mounted on an oscillation pin (25) on the intermediate annular support (15) and has said convex surface (17) facing the inner cylindrical braking surface (14) and having a shape partially congruent thereto.

6. A belt retractor according to any one of the preceding claims, wherein the movable braking body (16) is associated with at least one elastic element (24) acting between the movable braking body (16) and the intermediate annular support (15) to resiliently urge the movable braking body against the inner cylindrical braking surface (14).

7. A belt retractor according to any one of the preceding claims, comprising two movable braking bodies (16), mounted for oscillation about respective swing pins (25) spaced apart on the intermediate annular support, and each associated with at least one elastic element (24) urging the movable braking bodies against the inner cylindrical braking surface (14).

8. A belt retractor according to claim 1, wherein the intermediate locking member (32) is a translating member slidingly mounted within the housing (10).

9. A belt retractor according to claim 1 or 8, wherein the locking device further comprises a spring (34) that urges the intermediate locking member (32) away from the locking seat (33) of the spool (12).

10. A belt retractor according to any one of the preceding claims, wherein the manually operated member (31) is a rotatable member, operatively associated with the intermediate locking member (32) through a cam mechanism (35, 36) which, following a manual rotation imparted to the manually operated member (31), causes the intermediate locking member (32) to translate towards the locking seat (33) that is integral with the spool (12).

## Patentansprüche

1. Gurtaufroller für einen Gurt zum Halten von Objekten in einer Weltraumumgebung, wobei der Gurtaufroller umfasst:
ein äußeres Gehäuse (10) mit Mitteln (11) zum sicheren Befestigen des Aufrollers an einer stationären Halterung in einer Weltraumumgebung, wobei das Gehäuse enthält:
eine Spule (12), die um eine Rotationsachse (x) drehbar ist und auf welche ein Gurt aufgewickelt werden kann;
eine Rückspulfeder (13), die geeignet ist, die Spule (12) um die genannte Rotationsachse in einer Rotationsrichtung zu drehen, welche den Gurt auf die Spule aufwickelt;
eine innere zylindrische Bremsfläche (14), die mit dem äußeren Gehäuse (10) einstückig ist;
einen zentrifugal aktivierten Bremsmechanismus, der zwischen der Spule (12) und der inneren zylindrischen Bremsfläche (14) angeordnet ist, wobei der zentrifugal aktivierte Bremsmechanismus umfasst:
einen ringförmigen Zwischenträger (15), der um die Rotationsachse (x) drehbar ist und zwischen der Spule (12) und der inneren zylindrischen Bremsfläche (14) angeordnet ist,
mindestens einen beweglichen Bremskörper (16), der beweglich auf dem ringförmigen Zwischenträger (15) montiert ist und eine konvexe Fläche (17) aufweist, die elastisch gegen die innere zylindrische Bremsfläche (14) gedrückt wird, und
drehempfindliche Verriegelungsmittel (18, 19), die zwischen der Spule (12) und dem ringförmigen Zwischenträger (15) wirken und geeignet sind, die Spule und den ringförmigen Zwischenträger als Reaktion auf eine Rotation der Spule in einer Gurtaufwickelrichtung drehfest zu verriegeln und den ringförmigen Zwischenträger als Reaktion auf eine Rotation der Spule in einer Gurtabwickelrichtung drehbar von der Spule zu lösen;
wodurch der zentrifugal aktivierte Bremsmechanismus geeignet ist, abwechselnd und automatisch zwei Betriebszustände zu erreichen:
einen ungebremsten Zustand, wenn die Spule (12) in einer Gurtabwickelrichtung gedreht wird, in welchem Zustand sich die Spule frei relativ zu der Bremsfläche drehen kann; und
einen gebremsten Zustand, wobei, wenn die Spule (12) durch die Rückspulfeder (13) beaufschlagt wird, um sich in einer Gurtaufwickelrichtung zu drehen, die Rotation der Spule in der Gurtaufwickelrichtung bewirkt, dass die drehempfindlichen Verriegelungsmittel (18, 19) die Spule (12) drehfest mit dem genannten beweglichen Bremskörper (16) verbinden;
**dadurch gekennzeichnet, dass** der Gurtaufroller ferner eine Verriegelungsvorrichtung zum Verriegeln der Rotation der Spule (12) umfasst, wobei die Verriegelungsvorrichtung umfasst:
ein manuell betätigbares Element (31), das auf dem äußeren Gehäuse (10) montiert ist,
einen Verriegelungssitz (33), der mit der Spule (12) einstückig ist, und
ein zwischen dem manuell betätigbaren Element (31) und der Spule (12) angeordnetes Zwischenverriegelungselement (32), das geeignet ist, eine verriegelte Stellung zu erreichen, in welcher das manuell betätigbare Element (31) das Zwischenverriegelungselement (32) im Verriegelungssitz (33) der Spule hält und deren Rotation verhindert, sowie eine entriegelte Stellung, in welcher das manuell betätigbare Element (31) dem Zwischenverriegelungselement (32) erlaubt, sich aus dem Verriegelungssitz (33) der Spule zu lösen und deren Rotation zu ermöglichen.

2. . Gurtaufroller nach Anspruch 1, wobei die drehempfindlichen Verriegelungsmittel mindestens eine Sperrklinke (18) umfassen, die schwenkbar auf der Spule (12) um eine zur Rotationsachse parallele Schwenkachse montiert ist und ein freies Ende (21) aufweist, das geeignet ist, bei Rotation der Spule in der Gurtaufwickelrichtung in eine radial nach außen erstreckte Stellung zu schwenken, und
eine Vielzahl von Eingriffsausnehmungen (19), die radial von der Spule beabstandet und umfangsmäßig in einem durch den ringförmigen Zwischenträger (15) gebildeten zentralen Hohlraum (20) verteilt sind, wobei die Eingriffsausnehmungen so ausgebildet sind, dass sie geeignet sind, das freie Ende (21) der Sperrklinke (18) zu verriegeln, wenn sich die Spule (12) in der Gurtaufwickelrotationsrichtung dreht, und das freie Ende der Sperrklinke nicht zu verriegeln, wenn sich die Spule in der Gurtabwickelrotationsrichtung dreht.

3. . Gurtaufroller nach Anspruch 2, wobei die Eingriffsausnehmungen (19) als Sägezähne ausgebildet sind, mit alternierenden Flächen (22), die in im Wesentlichen radialen Richtungen relativ zu der Rotationsachse (x) orientiert sind, und Flächen (23), die in im Wesentlichen tangentialen Richtungen relativ zu der Spule (12) geneigt sind.

4. . Gurtaufroller nach Anspruch 1 oder 2 oder 3, wobei die drehempfindlichen Verriegelungsmittel zwei oder mehr Sperrklinken (18) umfassen, die schwenkbar auf der Spule um jeweilige voneinander beabstandete und zur Rotationsachse (x) parallele Schwenkachsen montiert sind.

5. . Gurtaufroller nach einem der vorhergehenden Ansprüche, wobei der genannte mindestens eine bewegliche Bremskörper (16) als ein Bremsschuh ausgebildet ist, der schwenkbar auf einem Schwenkzapfen (25) auf dem ringförmigen Zwischenträger (15) montiert ist und die genannte konvexe Fläche (17) aufweist, die der inneren zylindrischen Bremsfläche (14) zugewandt ist und eine hierzu teilweise kongruente Form besitzt.

6. . Gurtaufroller nach einem der vorhergehenden Ansprüche, wobei der bewegliche Bremskörper (16) mit mindestens einem elastischen Element (24) verbunden ist, das zwischen dem beweglichen Bremskörper (16) und dem ringförmigen Zwischenträger (15) wirkt, um den beweglichen Bremskörper elastisch gegen die innere zylindrische Bremsfläche (14) zu drücken.

7. . Gurtaufroller nach einem der vorhergehenden Ansprüche, umfassend zwei bewegliche Bremskörper (16), die zur Schwenkbewegung um jeweilige voneinander beabstandete Schwenkzapfen (25) auf dem ringförmigen Zwischenträger montiert sind und jeweils mit mindestens einem elastischen Element (24) verbunden sind, das die beweglichen Bremskörper gegen die innere zylindrische Bremsfläche (14) drückt.

8. . Gurtaufroller nach Anspruch 1, wobei das Zwischenverriegelungselement (32) ein translatorisches Element ist, das gleitend innerhalb des Gehäuses (10) montiert ist.

9. . Gurtaufroller nach Anspruch 1 oder 8, wobei die Verriegelungsvorrichtung ferner eine Feder (34) umfasst, die das Zwischenverriegelungselement (32) von dem Verriegelungssitz (33) der Spule (12) wegdrückt.

10. . Gurtaufroller nach einem der vorhergehenden Ansprüche, wobei das manuell betätigbare Element (31) ein drehbares Element ist, das operativ mit dem Zwischenverriegelungselement (32) durch einen Nockenmechanismus (35, 36) verbunden ist, welcher infolge einer dem manuell betätigbaren Element (31) aufgeprägten manuellen Drehung bewirkt, dass sich das Zwischenverriegelungselement (32) in Richtung des Verriegelungssitzes (33) bewegt, der mit der Spule (12) einstückig ist.

## Revendications

1. Un enrouleur pour une sangle destinée à retenir des objets dans un environnement spatial, l'enrouleur comprenant :
un boîtier externe (10) ayant des moyens (11) pour fixer solidement l'enrouleur à un support stationnaire dans un environnement spatial, dans lequel le boîtier contient :
une bobine (12), rotative autour d'un axe (x) de rotation, sur laquelle une sangle peut être enroulée ;
un ressort de rembobinage (13) capable de faire tourner la bobine (12) autour dudit axe de rotation dans une direction de rotation qui rembobine la sangle sur la bobine ;
une surface de freinage cylindrique interne (14) intégrale avec le boîtier externe (10) ;
un mécanisme de freinage activé centrifugement, interposé entre la bobine (12) et la surface de freinage cylindrique interne (14), dans lequel le mécanisme de freinage activé centrifugement comprend :
un support annulaire intermédiaire (15), rotatif autour de l'axe de rotation (x), et disposé entre la bobine (12) et la surface de freinage cylindrique interne (14),
au moins un corps de freinage mobile (16), monté mobile sur le support annulaire intermédiaire (15) et ayant une surface convexe (17) élastiquement sollicitée contre la surface de freinage cylindrique interne (14), et
des moyens de verrouillage sensibles à la rotation (18, 19) agissant entre la bobine (12) et le support annulaire intermédiaire (15), capables de verrouiller en rotation la bobine et le support annulaire intermédiaire en réponse à une rotation de la bobine dans une direction de rembobinage de la sangle, et de libérer en rotation le support annulaire intermédiaire de la bobine en réponse à une rotation de la bobine dans une direction de déroulement de la sangle ;
de sorte que le mécanisme de freinage activé centrifugement est capable d'atteindre alternativement et automatiquement deux configurations de fonctionnement :
une configuration non freinée, lorsque la bobine (12) tourne dans une direction de déroulement de la sangle, dans laquelle configuration la bobine peut tourner librement par rapport à la surface de freinage ; et
une configuration freinée, dans laquelle lorsque la bobine (12) est sollicitée par le ressort de rembobinage (13) pour tourner dans une direction de rembobinage de la sangle, la rotation de la bobine dans la direction de rembobinage de la sangle amène les moyens de verrouillage sensibles à la rotation (18, 19) à rendre la bobine (12) solidaire en rotation dudit corps de freinage mobile (16) ;
**caractérisé en ce que** l'enrouleur comprend en outre un dispositif de verrouillage destiné à verrouiller la rotation de la bobine (12), dans lequel le dispositif de verrouillage comprend :
un élément actionné manuellement (31) monté sur le boîtier externe (10),
un siège de verrouillage (33) intégral avec la bobine (12), et
un élément de verrouillage intermédiaire (32), interposé entre l'élément actionné manuellement (31) et la bobine (12), capable d'atteindre une position verrouillée, dans laquelle l'élément actionné manuellement (31) maintient l'élément de verrouillage intermédiaire (32) engagé dans le siège de verrouillage (33) de la bobine en empêchant sa rotation, et une position déverrouillée, dans laquelle l'élément actionné manuellement (31) permet à l'élément de verrouillage intermédiaire (32) de se dégager du siège de verrouillage (33) de la bobine, en permettant sa rotation.

2. Un enrouleur selon la revendication 1, dans lequel les moyens de verrouillage sensibles à la rotation comprennent au moins un cliquet (18) monté pivotant sur la bobine (12) autour d'un axe d'oscillation parallèle à l'axe de rotation et ayant une extrémité libre (21) capable de pivoter, lors de la rotation de la bobine dans la direction de rembobinage de la sangle, vers une position étendue radialement vers l'extérieur, et
une pluralité d'évidements d'engagement (19) radialement espacés de la bobine et distribués circonférentiellement dans une cavité centrale (20) formée par le support annulaire intermédiaire (15), dans lequel les évidements d'engagement sont configurés pour être capables de verrouiller l'extrémité libre (21) du cliquet (18) lorsque la bobine (12) tourne dans la direction de rotation de rembobinage de la sangle, et de ne pas verrouiller l'extrémité libre du cliquet lorsque la bobine tourne dans la direction de rotation de déroulement de la sangle.

3. Un enrouleur selon la revendication 2, dans lequel les évidements d'engagement (19) sont configurés sous forme de dents de scie, avec des faces alternées (22) orientées dans des directions sensiblement radiales par rapport à l'axe de rotation (x) et des faces (23) inclinées dans des directions sensiblement tangentielles par rapport à la bobine (12).

4. Un enrouleur selon la revendication 1 ou 2 ou 3, dans lequel les moyens de verrouillage sensibles à la rotation comprennent deux cliquets (18) ou plus montés pivotants sur la bobine autour d'axes d'oscillation respectifs espacés et parallèles à l'axe de rotation (x).

5. Un enrouleur selon l'une quelconque des revendications précédentes, dans lequel ledit au moins un corps de freinage mobile (16) est configuré comme un sabot de frein monté pivotant sur un axe d'oscillation (25) sur le support annulaire intermédiaire (15) et ayant ladite surface convexe (17) tournée vers la surface de freinage cylindrique interne (14) et ayant une forme partiellement congruente avec celle-ci.

6. Un enrouleur selon l'une quelconque des revendications précédentes, dans lequel le corps de freinage mobile (16) est associé à au moins un élément élastique (24) agissant entre le corps de freinage mobile (16) et le support annulaire intermédiaire (15) pour solliciter élastiquement le corps de freinage mobile contre la surface de freinage cylindrique interne (14).

7. Un enrouleur selon l'une quelconque des revendications précédentes, comprenant deux corps de freinage mobiles (16), montés pour osciller autour d'axes de pivotement respectifs (25) espacés sur le support annulaire intermédiaire, et chacun associé à au moins un élément élastique (24) sollicitant les corps de freinage mobiles contre la surface de freinage cylindrique interne (14).

8. Un enrouleur selon la revendication 1, dans lequel l'élément de verrouillage intermédiaire (32) est un élément en translation monté coulissant à l'intérieur du boîtier (10).

9. Un enrouleur selon la revendication 1 ou 8, dans lequel le dispositif de verrouillage comprend en outre un ressort (34) qui sollicite l'élément de verrouillage intermédiaire (32) à l'écart du siège de verrouillage (33) de la bobine (12).

10. Un enrouleur selon l'une quelconque des revendications précédentes, dans lequel l'élément actionné manuellement (31) est un élément rotatif, associé opérativement à l'élément de verrouillage intermédiaire (32) au moyen d'un mécanisme à came (35, 36) qui, à la suite d'une rotation manuelle imprimée à l'élément actionné manuellement (31), provoque la translation de l'élément de verrouillage intermédiaire (32) vers le siège de verrouillage (33) qui est intégral avec la bobine (12).
